# EUROPÄISCHE PATENTSCHRIFT

(11) **EP 2 459 292 B1**
(45) Veröffentlichungstag und Bekanntmachung des Hinweises auf die Patenterteilung: **14.02.2018**
(21) Anmeldenummer: 10724282.8
(22) Anmeldetag: 21.05.2010
(51) Int. Cl.: B01D 35/02, B01J 47/022, B01J 47/024, B01J 47/04, B01D 24/12, B01D 27/02, B01D 29/11, B01D 27/14, B01D 35/027, C07F 9/02, C10M 175/00

(54) **FILTERVORRICHTUNG**
FILTER APPARATUS
DISPOSITIF DE FILTRATION

(30) Priorität: 30.07.2009 DE 102009035401
(43) Veröffentlichungstag der Anmeldung: 06.06.2012
(73) Patentinhaber: Hydac Filter Systems GmbH, 66280 Sulzbach/Saar (DE)
(72) Erfinder: BAUER, Martin, 66822 Lebach (DE); SCHUNK, Andreas, 66914 Waldmohr (DE); DUCHOWSKI, John, Kazimierz, 66115 Saarbrucken (DE)
(74) Vertreter: Bartels, Martin Erich Arthur
(86) Internationale Anmeldenummer: PCT/EP2010/003145
(87) Internationale Veröffentlichungsnummer: WO 2011/012184

(56) Entgegenhaltungen:
- WO-A1-00/58222
- WO-A1-01/07090
- WO-A1-96/07462
- WO-A1-99/62827
- DE-U1- 29 907 957
- GB-A- 2 142 939
- US-A- 4 352 735
- US-A- 4 654 142

## Beschreibung

Die Erfindung bezieht sich auf eine Filtervorrichtung zum Reinigen von funktionalen Fluiden, insbesondere ausgewählt aus Phosphatestern, Ölen auf Phosphatesterbasis, Mineralölen und Phenolen, mit den Merkmalen im Oberbegriff von Anspruch 1.

Die angesprochenen funktionalen Fluide kommen in hydraulischen Anlagen wie beispielsweise Gasturbinen, Dampfturbinen und in der Turbinensteuerung als Schmiermittel oder auch als hydraulisches Medium zum Einsatz. Oftmals wird über ihre Eignung als Schmier- bzw. Hydraulikmedium hinaus weiterhin gefordert, dass die Fluide schwer entflammbar sind. Zum Erhalt der einwandfreien Funktion der jeweiligen hydraulischen Anlage ist es erforderlich, dass ein eingesetztes Fluid während der gesamten Zeit, in der es beispielsweise in einem Fluidkreislauf der hydraulischen Anlage zirkuliert, eine sehr hohe Qualität aufweist und insbesondere Verunreinigungen jeglicher Art, die insbesondere mit der Degeneration des Fluids im Gebrauch einhergehen, nur bis zu einem Höchstmaß, das in der Regel sehr niedrig anzusetzen ist, zugelassen werden. Von daher ist bei hydraulischen Anlagen, die keine Reinigung des Fluids vorsehen, bei Erreichen einer höchstzulässigen Verunreinigung jeweils der vollständige Austausch des verbrauchten Fluids gegen ein neues Fluid erforderlich. Dies ist zum einen bei den meisten hydraulischen Anlagen sehr arbeitsintensiv, zum anderen sind die genannten Fluide insbesondere, wenn sie mit speziellen Eigenschaften wie schwer entflammbar u. ä. ausgestattet sind, sehr teuer. Daraus ergibt sich ein berechtigtes Interesse, die Lebensdauer eines eingesetzten Fluids zu verlängern, und hierzu bietet sich insbesondere das Reinigen des Fluids an.

Filtervorrichtungen mit einem Filterbett aus anionischen und kationischen lonenaustauscherharzen (US 3,708,508 und US 4,741,857) kommen zum Einsatz, um aggressive Säuren aus funktionalen Fluiden, insbesondere schwer entflammbaren Hydraulikfluiden auf Phosphatesterbasis (HFD-R), zu entfernen. Die Alterung dahingehender Fluide beruht auf der Hydrolyse, bei der als Abbauprodukt unter anderem aggressive Säuren entstehen. Durch spezielle lonenaustauscherharze lassen sich die Neutralisationszahl N_{z}, im Englischen auch als "TAN" (Total Acid Number) bezeichnet, und der Gehalt an Metallseifen reduzieren. Ergänzend zu einer solchen Reinigung der Fluide wird oftmals noch eine kontinuierliche Entwässerung des Fluids durchgeführt. Der angestrebte Wert der Neutralisationszahl des gereinigten Fluids liegt bei N_{z} ≤ 0,1 mg KOH/g_{Fluid} und für den praktischen Einsatz der Fluide in hydraulischen Anlagen sind Werte der Neutralisationszahl N_{z} von bis zu 1 mg KOH pro Gramm Fluid ohne weiteres erreichbar.

Aus der EP 0 696 311 B1 ist ein Verfahren zur Behandlung eines nicht wässrigen, funktionalen Fluids, ausgewählt aus Phosphatestern, Mineralölen und Carboxylatestern bekannt, bei dem ein Teil der gesamten Fluidmenge mit einem anionischen lonenaustauscherharz in Gegenwart von ausreichend Wasser kontaktiert wird, damit der Säuregehalt des Fluids verringert werden kann. Anschließend findet bei der bekannten Lösung ein Entfernen von Wasser aus dem Fluid durch Vakuumentwässern und schließlich ein Vereinigen des behandelten Fluids mit dem Hauptteil des sonstigen Fluids (in situ) statt.

Aus der US 5,661,117 B1 ist ein Verfahren zur Regeneration von Phosphatester-Schmierfluiden bekannt, bei dem das Schmierfluid in einer mechanischen Anlage zirkuliert und mit metallischem Material sowie phosphorbasierten Säuren verunreinigt ist und bei dem die Reinigung zu einer neuen Fluidqualität mit einer TAN (Total Acid Number) von 0,03 führt und welches im Wesentlichen aus den Schritten besteht:
- Bereitstellen einer Quelle eines Phosphatester-Schmiermittels, welches in einer mechanischen Vorrichtung zirkuliert und das wenigstens ein Metall aufweist aus der Gruppe bestehend aus Aluminium, Chrom, Zinn, Eisen, Natrium, Calcium, Magnesium, Silicium und Phosphor basierte Säuren;
- Bereitstellen einer Quelle von anionischem lonenaustauscherharz in einer Patrone in Fluidkommunikation mit der Vorrichtung, wobei das Harz einen Flüssigkeitsgehalt von zumindest ungefähr 50 % aufweist;
- Heranführen des mit den Metallen und den Säuren verunreinigten Phosphatester-Schmierfluids zwecks Kontakt mit dem Harz; und
- Entfernen der metallischen Verbindungen und der Säuren mittels Einsatz des Harzes durch Ersetzen des Filters mit einer Periodizität von bis zu 27 Monaten, wenn sich ein Anstieg der TAN von ungefähr 0,07 ergibt, um ein im Wesentlichen von Verunreinigungen freies wiederverwendbares Schmiermittelfluid in neuer Qualität bereitzustellen, das eine Total Acid Number von 0,03 aufweist.

Die WO 00/58222 A1 beschreibt eine Filtervorrichtung zum Reinigen von Wasser, mit einer Filterkomponente und mit einer Komponente zur Desinfizierung von Wasser, wobei die Filterkomponente eine wasserdurchlässige Wand in der Art einer Filtermatte aufweist und wobei die Komponenten zur Desinfizierung des Wassers ein Harz-Granulat zur Desinfizierung des Wassers aufweist. Die Komponente zur Desinfizierung weist eine wasserundurchlässige Wand, sowie einen Wassereinlass und einen Wasserauslass auf. Das Harz-Granulat liegt auf einer siebartigen Unterlage. Das Wasser strömt radial in die Filtervorrichtung und wird axial durch das Harz-Granulat und eine zylindrische Kammer umgelenkt.

Weitere Filtervorrichtungen gehen aus der WO 01/07090 A1, der WO 96/ 07462 A1, der US 4,352,735, der US 4,654,142, der WO 99/62827 A1 und der DE 299 07 957 U1 hervor.

Ausgehend von diesem Stand der Technik stellt sich die Erfindung die Aufgabe, eine Filtervorrichtung zum Reinigen von funktionalen Fluiden bereitzustellen, die neben einem kompakten Aufbau eine hohe Zuverlässigkeit und dennoch einfache Handhabbarkeit im praktischen Gebrauch realisiert. Die Reinigung des funktionalen Fluids soll bei der erfindungsgemäßen Filtervorrichtung unter möglichst guter Ausnutzung des Filterbetts zu einem Fluid hoher Qualität führen. Ferner soll die Filtervorrichtung auch in bereits bestehende hydraulische Anlagen in einfacher Weise nachgerüstet werden können.

Erfindungsgemäß ist diese Aufgabe durch eine Filtervorrichtung gelöst, die die Merkmale des Patentanspruchs 1 in seiner Gesamtheit aufweist.

Gemäß dem Kennzeichen von Anspruch 1 ist vorgesehen, dass das eine Filterelement mittels einer Halteeinrichtung auf das eine stirnseitige Ende des Filtergehäuses aufgesetzt ist, dass eine Außenseite des einen Filterelementes eine Verlängerung einer Außenseite des Filtergehäuses bildet und dass dadurch, dass die Außenseite des einen Filterelements und die Außenseite des Filtergehäuses miteinander fluchten, eine flächige Anlage der radial äußeren Schenkel eines H-förmigen Profils der Halteeinrichtung sowohl an der Außenseite des Filtergehäuses als auch an der Außenseite des einen Filterelements gewährleistet ist.

Sofern die dahingehende Halteeinrichtung ein Lösen des einen Filterelements von dem Filtergehäuse zulässt, ist damit eine einfache Möglichkeit geschaffen, das eine Filterelement losgelöst von der Filtervorrichtung zu reinigen oder das eine Filterelement gegen ein neues zu ersetzen. Als eine lösbare Halteeinrichtung kann hierbei ein in der Art eines Adapters zwischen dem einen Filterelement und dem Filtergehäuse eingebrachter Ring dienen, welcher an seinem Außenumfang umlaufend ein sich im Einbauzustand sowohl in Richtung des einen Filterelements als auch in Richtung des Filtergehäuses erstreckendes Halteband aufweist, welches, den dem Ring zugewandten Endbereich des Filtergehäuses als auch den dem Ring zugewandten Endbereich des einen Filterelements umlaufend umfassend, ein Halten des auf dem stirnseitigen Ende des Filtergehäuse aufgesetzten einen Filterelements zulässt. Auf diese Weise ist auch ein einfacher Wechsel des in das Filtergehäuse eingebrachten lonenaustauscherharzes möglich, in dem das eine Filterelement über die Halteeinrichtung von dem Filtergehäuse getrennt wird und dergestalt lonenaustauscherharz aus dem Filtergehäuse entnommen oder in dieses neu eingebracht werden kann.

In der Regel wird die Filtervorrichtung im Nebenstrom zu einem bestehenden Tank einer hydraulischen Anlage angeschlossen werden. Ein Filterbett aus vorzugsweise anionischem und kationischem Ionenaustauscherharz wird mit einem genau angepassten Fluid-Volumenstrom in Querstromgeschwindigkeit durchflossen. Während dieser Durchströmung werden die im Fluid enthaltenen Säuren, metallische Seifen sowie sonstige basische Medien und etwaig vorhandene Partikelverschmutzungen entfernt. Dadurch wird eine Verbesserung der Qualität des funktionalen Fluids unter anderem durch das Absenken der Neutralisationszahl erreicht.

Dadurch, dass bei der Filtervorrichtung neben einem Filterbett mindestens ein Filterelement vorgesehen ist, das als Strömungsleiteinrichtung konzipiert eine Umlenkung des Fluids von einer radialen in eine axiale Strömungsrichtung oder umgekehrt erlaubt, ist eine kompakte Baueinheit geschaffen.

Dadurch dass das mindestens eine Filterelement als Strömungsleiteinrichtung konzipiert die Strömungsrichtung des Fluids umlenkt, können die jeweiligen Gegebenheiten der hydraulischen Anlage, an die die Filtervorrichtung angeschlossen werden soll, berücksichtig werden, um so die für einen optimalen Reinigungserfolg besten Strömungsrichtungen des Fluids zu realisieren. Durch ein radiales Anströmen der Filtervorrichtung kann beispielsweise ein großer Bereich um die Filtervorrichtung herum für die Partikelabreinigung erfasst werden, während beispielsweise ein axiales Ausströmen des Fluids aus der Filtervorrichtung vorteilhaft für den Anschluss von Rohren bzw. einer Pumpe zur kavitationsarmen Weiterleitung des Fluids ist. Die erfindungsgemäße Lösung lässt sich entweder mit einem einstückig ausgebildeten Gehäuse ausführen oder es kann ein insoweit mehrteiliger Aufbau der Filtervorrichtung vorgesehen sein, bei dem ein oder mehrere Filterelemente an dem sonstigen Vorrichtungsgehäuse lösbar festgelegt sind.

Bei einem vorteilhaften Ausführungsbeispiel ist in Strömungsrichtung des Fluids gesehen die mindestens eine als Filterelement ausgebildete Strömungsleiteinrichtung vor dem Filterbett angeordnet und kann so insbesondere in der Art eines Vorfilters eine erste Partikelabreinigung des Fluids vornehmen und so ein als Filterbett eingebrachtes lonenaustauscherharz vor dem Eintrag eines Teils der Verunreinigungen des Fluids schützen. In Strömungsrichtung des Fluids gesehen ist bei einem weiteren besonders bevorzugten Ausführungsbeispiel eine weitere als Filterelement ausgebildete Strömungsleiteinrichtung nach dem Filterbett angeordnet, welche in der Art eines Schutzfilters dem Nachreinigen des Fluids und dem Schutz des hydraulischen Systems vor möglichem Austrag des lonentauscherharzes dient. Insbesondere die Kombination des Vorfilters vor dem Filterbett und des Schutzfilters nach dem Filterbett in einer Filtervorrichtung führt zu einem sehr kompakten Aufbau. Die erfindungsgemäße Filtervorrichtung ist in der Art einer handelbaren Patrone ausgebildet, die sich auch im Rahmen einer Nachrüstung in bereits bestehende hydraulische Anlagen gut nachrüsten lässt.

Bei einem weiteren Ausführungsbeispiel ragt das weitere Filterelement an der anderen Stirnseite des Filtergehäuses angeordnet in dieses hinein und das Filterbett umfasst das weitere Filterelement, so dass bei hoher Packungsdichte das Filterbett platzsparend im Filtergehäuse aufnehmbar ist.

Dadurch dass die Filterfeinheit des weiteren Filterelements feiner ist als die Partikelgröße in der Mischung aus den lonenaustauscherharzen ist gewährleistet, dass ein ungewollter Austrag der lonenaustauscherharze aus der Filtervorrichtung vermieden ist, so dass das gereinigte Fluid, das die Filtervorrichtung verlässt, auch nicht durch Partikel des Ionenaustauscherharzes verunreinigt ist. Dadurch dass das Filterbett das weitere Filterelement wie dargelegt zumindest teilweise umfasst, ist des Weiteren ein großflächiges, hemmnisarmes Anströmen des weiteren Filterelements durch Fluid, das das Filterbett durchlaufen hat, ermöglicht, zwecks Abreinigen letzter Partikelverschmutzungen durch das als Feinfilter konzipierte weitere Filterelement, bevor das Fluid die Filtervorrichtung verlässt.

Bei einem vorteilhaften Ausführungsbeispiel ist das weitere Filterelement von einem Sockelteil getragen, das mit seinem Fußteil in der Art einer Endkappe für das Filtergehäuse ausgebildet ist und mit seinem Kopfteil in koaxialer Anordnung zur Längsachse des Filtergehäuses angeordnet eine weitere Durchtrittsöffnung aufweist für den Austritt des mittels der Filtervorrichtung insgesamt abgereinigten Fluids. Dadurch, dass das weitere Filterelement von einer Art Endkappe des Filtergehäuses getragen ist, ergeben sich eine einfache Montage und gegebenenfalls ein einfacher Austausch des weiteren Filterelements der Filtervorrichtung auch im dahingehenden Endbereich.

Bei einer bevorzugten Ausführungsform der erfindungsgemäßen Filtervorrichtung ist vorgesehen, dass das weitere Filterelement an seinem, dem Sockelteil gegenüberliegenden Ende, mit einer Endkappe verschlossen ist, an der sich säulenartig Teile des Filterelementes abstützen können. Vorzugsweise ist dabei ferner vorgesehen, dass der Durchmesser einer von der Endkappe des weiteren Filterelementes abgestützten ersten Säule kleiner ist, als die Durchtrittsöffnung der Halteeinrichtung und dass eine weitere, konzentrisch zu der ersten Säule angeordnete weitere Säule sich am Sockelteil des Filtergehäuses abstützend die erste Säule stabilisiert. Sofern die Säulen eine unterschiedliche Dichte für das lonenaustauscherharz des Filterbettes aufweisen, lässt sich dergestalt innerhalb des Filterbettes sowohl die Rieselgeschwindigkeit als auch der Rieselstromverlauf einstellen. So kann beispielsweise die zuäußerst angeordnete weitere Säule als Hohlsäule ausgebildet, im verdichteten Rahmen die zuinnerst liegende massiv ausgebildete Säule geringerer Dichte abstützen und einen verstärkten Flussverlauf in Richtung des Zentrums der Filtervorrichtung veranlassen. Im umgekehrten Fall besteht die Möglichkeit, Fluidmedium aus dem Zentrum heraus zur

Außenseite der Vorrichtung zu führen, um dergestalt trotz des zentralen Fluidzulaufs über die obere Filtervorrichtung eine gleichmäßige Fluiddurchdringung des Filterbettes zu erzwingen. Auch ist es möglich, die verschiedenen Säulen mit unterschiedlichem Gehalt (Mengen- oder Volumenprozenten) an anionischem und kationischem lonenaustauscherharz zu füllen, um dergestalt die Prozesssteuerung für die Filterbettabreinigung zu optimieren. Neben zwei, konzentrisch zueinander angeordneten Säulen besteht auch die Möglichkeit in der Art einer "Kolonnenführung" mehrere Säulen konzentrisch innerhalb der Filtervorrichtung anzuordnen.

Bevorzugt ist ferner vorgesehen, dass die Wirkvolumina zweier zum Einsatz kommender Säulen für die Fluidabreinigung im wesentlichen gleich bemessen sind, wobei das Filterbett im Einbauzustand der Filtervorrichtung gesehen, oberhalb des weiteren Filterelementes einen in sich geschlossenen zylindrischen Funktionsblock ausbilden soll, um wiederum eine zentrische Fluidführung innerhalb der Vorrichtung bei relativ großer Verweildauer des Fluids zu erreichen.

Bei einem vorteilhaften Ausführungsbeispiel ist die Filtervorrichtung im Nebenstrom einer hydraulischen Anlage angeschlossen und zur Vermeidung einer Luftanreicherung des Fluids unterhalb des Fluidniveaus der hydraulischen Anlage angeordnet. Durch die Anordnung der Filtervorrichtung im Nebenstrom der hydraulischen Anlage lassen sich eine angepasste Volumenstrom- und Querstromgeschwindigkeit des Fluids durch die Filtervorrichtung einstellen, so dass diese in ihren optimalen Betriebspunkten betreibbar ist. Eine Anreicherung des Fluids durch Luft ist in jedem Fall zu vermeiden, so dass die Filtervorrichtung unterhalb des Fluidniveaus der hydraulischen Anlage anzuordnen ist. Gleichzeitig wird in der Regel aber auch versucht werden, die Höhendifferenz zwischen der Filtervorrichtung und dem Fluidniveau so gering wie möglich zu halten, um so das Einströmen von Verschmutzungen, die sich verstärkt in der Nähe des Bodens eines für das Fluid vorgesehenen Tanks befinden, in das eine Filterelement der Filtervorrichtung wirksam zu vermeiden.

Bei einem vorteilhaften Ausführungsbeispiel bilden das anionische lonenaustauscherharz und das kationische lonenaustauscherharz, jeweils in Form eines Granulats vorliegend, miteinander vermischt das Filterbett aus. Bei einem weiteren Ausführungsbeispiel besteht das Filterbett aus 60 % bis 95 % anionischem lonenaustauscherharz und 40 % bis 5 % kationischem lonenaustauscherharz, vorzugsweise aus 70 % bis 90 % anionischem Ionenaustauscherharz, und aus 30 % bis 10 % kationischem lonenaustauscherharz. Besonders bevorzugt ist jedoch, dass das lonenaustauscherharz aus 90 % anionischem lonenaustauscherharz und 10 % kationischem lonenaustauscherharz besteht.

Nachstehend ist die Erfindung anhand eines in der Zeichnung dargestellten Ausführungsbeispiels im Einzelnen erläutert. Es zeigt die einzige Figur einen Längsschnitt eines Ausführungsbeispiels der erfindungsgemäßen Filtervorrichtung.

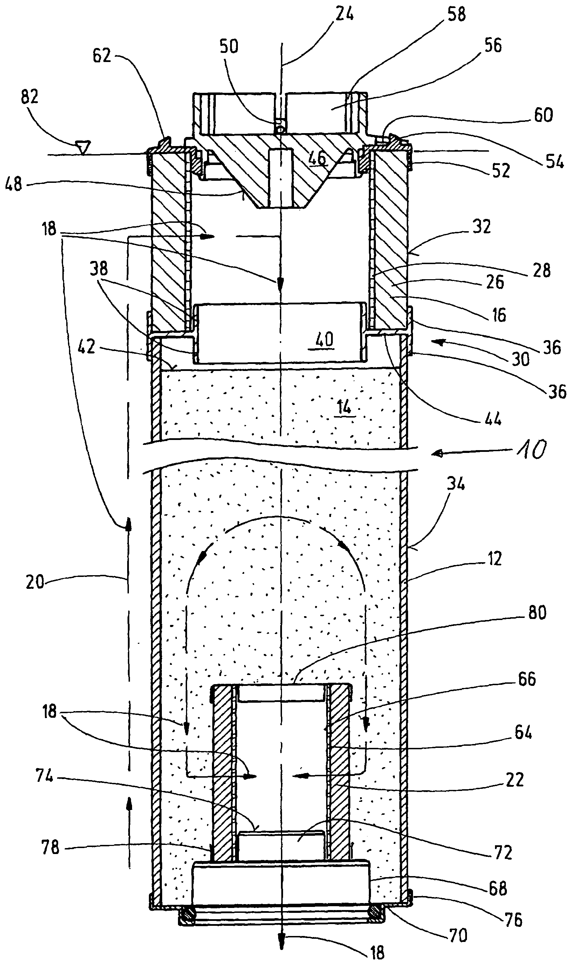

Die Figur zeigt einen Längsschnitt eines Ausführungsbeispiels einer erfindungsgemäßen Filtervorrichtung 10 zum Reinigen von funktionalen Fluiden mit einem Filtergehäuse 12, in das ein Filterbett 14 eingebracht ist, das vorzugsweise aus einer Mischung aus anionischem und kationischem lonenaustauscherharz besteht. Des Weiteren weist die Filtervorrichtung 10 ein Filterelement 16 auf, das als Strömungsleiteinrichtung konzipiert eine Umlenkung des Fluids von einer radialen in eine axiale Strömungsrichtung 18 erlaubt. Die jeweilige Strömungsrichtung 18 ist in der Fig. 1 jeweils durch einen Pfeil wiedergegeben, der längs des durch eine unterbrochene Linie dargestellten ungefähren Strömungsweges 20 des Fluids außerhalb und innerhalb der Filtervorrichtung entsprechend orientiert ist.

In Strömungsrichtung 18 des Fluids gesehen ist das eine Filterelement 16 vor dem Filterbett 14, d. h. stromaufwärts des Filterbetts 14, angeordnet, während eine weitere als Filterelement 22 ausgebildete Strömungsleiteinrichtung nach dem Filterbett 14 d. h. stromabwärts des Filterbetts 14 angeordnet ist.

Das als Zylinder mit kreisförmiger Grundfläche ausgeführte Filtergehäuse 12 weist eine Längsachse 24 auf und besteht vorzugsweise aus einem metallischen Werkstoff oder aus Kunststoff und ist in der Art eines Rohrkörpers ausgeführt, der in seinem hohlen Innenraum einen Aufnahmeraum für das einzubringende lonenaustauscherharz 14 zur Verfügung stellt.

Das in Form eines Kreiszylinders ausgeführte eine Filterelement 16, welches in einer radialen Strömungsrichtung 18 durch das Fluid von außerhalb der Filtervorrichtung 10 her angeströmt wird, weist auf seinem dem Fluid zugewandten Außenmantel eine umlaufende Filtermatte 26 auf, die vorzugsweise in plissierter Form vorliegt. Auf ihrer Innenseite wird die Filtermatte 26 durch ein Stützrohr 28 abgestützt, durch welches das Fluid in den Innenraum des einen Filterelements 16 eindringen kann. Das Stützrohr 28 weist hierbei die ungefähr gleiche Längserstreckung in Richtung der Längsachse 24 wie die Filtermatte 26 auf, so dass sich an den beiden Stirnseiten des einen Filterelements 16 jeweils eine ebene Anlagefläche ergibt. Das Stützrohr 28 besteht beispielsweise aus einem metallischen Werkstoff oder einem geeigneten Kunststoffmaterial. Der Strömungsweg 20 des durch das eine Filterelement 16 vorgereinigten Fluids setzt sich bei Verlassen des einen Filterelements 16 in axialer Strömungsrichtung 18 parallel zur Längsachse 24 fort in der das Fluid im Gebrauch der Filtervorrichtung 10 zum Filterbett 14 gelangt.

Das eine Filterelement 16 ist mittels einer Halteeinrichtung 30 auf das mit Blick auf Fig. 1 obere stirnseitige Ende des Filtergehäuses 12 aufgesetzt und die Außenseite 32 des einen Filterelements 16 bildet eine Verlängerung der Außenseite 34 des Filtergehäuses 12. Die Haltevorrichtung 30 ist in Form eines ringförmigen Adapters ausgeführt, der ein ungefähr H-förmiges Querschnittsprofil aufweist und koaxial zur Längsachse 24 ausgerichtet ist. Mit Blick auf die in der Fig. 1 gezeigte Einbaulage der Filtervorrichtung 10 ist die Haltevorrichtung 30 oberhalb des Filterbettes 14 und des Filtergehäuses 12 angeordnet. Dadurch dass die Außenseite 32 des einen Filterelements 16 und die Außenseite 34 des Filtergehäuses 12 miteinander fluchten, ist eine flächige Anlage der radial äußeren Schenkel 36 des H-förmigen Profils der Halteeinrichtung 30 sowohl an der Außenseite 34 des Filtergehäuses 12 als auch an der Außenseite 32 des einen Filterelements gewährleistet. Der obere radial innere Schenkel 38 des H-förmigen Profils der Halteeinrichtung 30 ragt mit Blick auf die Fig. 1 nach oben hin in den Innenraum des einen Filterelements 16 hinein und kann gegebenenfalls in Anlage an die Innenseite des Stützrohrs 28 gebracht sein. Nach unten hin ragt der weitere innere Schenkel 38 in den Innenraum des Filtergehäuses 12 hinein.

Der durch die inneren Schenkel 38 des H-förmigen Profils der Halteeinrichtung 30 umfasste Hohlraum bildet eine Durchtrittsöffnung 40 für das mittels des einen Filterelementes 16 von Partikelverschmutzungen abgereinigten Fluids aus, die koaxial zur Längsachse 24 des Filtergehäuses 12 angeordnet ist. Hierbei sind die inneren Schenkel 38 der Halteeinrichtung 30 oberhalb des Niveaus 42 des eingebrachten Filterbetts 14 angeordnet. Vorzugsweise ist für die Verbindung der Halteeinrichtung 30 mit dem Filtergehäuse 12 und dem einen Filterelement 16 eine Klebstoffverbindung vorgesehen, jedoch sind auch Ausführungsbeispiele realisierbar, die eine lösbar festlegbare Verbindung beispielsweise in Form einer Schraubverbindung oder einer Klammerverbindung realisieren. Für eine Klebstoffverbindung kann vorgesehen sein, dass zwischen dem oberen stirnseitigen Ende des Filtergehäuses 12 und einem Steg 44 sowie dem mit Blick auf Fig. 1 gesehen unteren äußeren Schenkel 36 des H-förmigen Profils der Halteeinrichtung 30 und der Außenseite 34 des Filtergehäuses 12 eine Klebstoffschicht aufgebracht ist, um dergestalt das Filtergehäuse 12 sowohl stumpf gegen den Steg 44 als auch längs seines Außenumfanges flächig mit dem unteren äußeren Schenkel 36 der Halteeinrichtung 30 zu verkleben. Zur Verbindung des einen Filterelements 16 mit der Halteeinrichtung 30 kann vorgesehen sein, in einem sich oberhalb des Stegs 14 des H-förmigen Profils erstreckenden und von einem äußeren Schenkel 36 und einem inneren Schenkel 38 begrenzten umlaufenden Aufnahmeraum der Halteeinrichtung 30 das Klebstoffmaterial aufzubringen.

An seinem der Halteeinrichtung 30 gegenüberliegenden Ende ist das eine Filterelement 16 und damit die Filtervorrichtung 10 über eine als Strömungsleitkörper ausgeführte obere Endkappe 46 abgeschlossen, deren in das eine Filterelement 16 hineinragender Teil einen im Wesentlichen trapezförmigen Querschnitt aufweist und mit einer umlaufenden Schrägfläche 48 ausgebildet ist. Die Verbindung des einen Filterelements 16 mit der oberen Endkappe 46 erfolgt durch einen Adapterring 54, der eine ungefähr U-förmige und mit Blick auf Fig. 1 nach unten hin geöffnete Querschnittsform aufweist, in die ein oberer Abschnitt des einen Filterelements 16 aufgenommen ist. Hierbei kommt ein durch den radial außenliegenden Schenkel des U-förmigen Querschnitts gebildeter Außenring 52 in Anlage an die Außenseite 32 des einen Filterelements 16, während der radial innenliegende Schenkel des U-förmigen Profils in Anlage an die Innenseite des Stützrohres 28 gebracht ist. Über eine Rast- oder Klebstoffverbindung ist die obere Endkappe 46 mit dem Adapterring 54 lösbar oder nicht lösbar verbindbar. Oberhalb des Adapterrings 54 ist die obere Endkappe mit einem kurzen Rohrstück 56, welches in Richtung der Längsachse 24 verlaufenden Schlitzen 58 aufweist, versehen. Durch die mittels der Schlitze 58 erreichte Elastizität des Rohrstücks 56 lässt sich die Filtervorrichtung 10 in einfacher Weise und werkzeuglos in eine geeignete Aufnahme (nicht dargestellt) einbringen. Um gegenüberliegend angeordnete Gelenkstellen 50 ist des Weiteren eine Handhabe 60, beispielsweise in Form eines Henkels aufstellbar, um dergestalt die Filtervorrichtung 10 in einfacher Weise handhaben zu können. Die Handhabe 60 kann, wenn sie nicht benötigt ist, an Rastnasen 62 des Adapterrings 54 festgelegt werden. Für die Verbindung des einen Filterelements 16 mit dem Adapterring 54 kann eine Klebstoffverbindung oder eine lösbare Verbindung, beispielsweise in Form einer Schraubverbindung, vorgesehen sein.

Im mit Blick auf die Figur gesehen unteren Teil der Filtervorrichtung 10 ist das weitere Filterelement 22 angeordnet und ragt hierbei in das Filtergehäuse 12 hinein. Das Filterbett 14 umfasst das weitere zylinderförmige und um die Längsachse 24 ausgerichtete Filterelement 22. Eine vorzugsweise plissierte Filtermatte 64 des Filterelements 22 umgibt außenseitig ein Stützrohr 66. Die Filterfeinheit der Filtermatte 64 ist hierbei so gewählt, dass sie feiner ist als die Partikelgröße der Mischung aus lonenaustauscherharzen des Filterbettes 14.

Die Längserstreckung des weiteren Filterelements 22 in Richtung der Längsachse 24 entspricht ungefähr der Längserstreckung des einen Filterelements 16 am gegenüberliegenden Ende der Filtervorrichtung.

Das weitere Filterelement 22 ist von einem Sockelteil 68 getragen, das mit seinem Fußteil 70 in der Art einer Endkappe für das Filtergehäuse 12 ausgebildet ist und mit seinem Kopfteil 72 in koaxialer Anordnung zur Längsachse 24 des Filtergehäuses 12 angeordnet eine weitere Durchtrittsöffnung 74 für den Austritt des mittels der Filtervorrichtung 10 insgesamt abgereinigten Fluids aufweist.

Das weitere Filterelement 22 ist an seinem einem Sockelteil 68 gegenüberliegenden Ende mit einer Endkappe 80 verschlossen, die in ihrem Randbereich ein umlaufendes U-förmiges und nach unten hin offenes Querschnittsprofil aufweist, dessen radial innerer Schenkel an der Innenwand des Stützrohrs 66 und dessen radial äußerer Schenkel an der Außenwand der Filtermatte 64 des weiteren Filterelements 22 anliegt. An dem der Endkappe 80 gegenüberliegenden Ende des weiteren Filterelements 22 ist dieses mit seinem Stützrohr 66 über das stutzenartig über den Sockelteil 68 hinausragende Kopfteil 72 gestülpt, während es mit der Außenseite der Filtermatte 64 an einem umlaufenden Steg 78, der auf dem Sockelteil 68 radial beabstandet zum Kopfteil 72 angeordnet ist, anliegt. Sowohl für die Verbindung der Endkappe 80 als auch des Sockelteils 68 mit dem weiteren Filterelement 22 ist eine Klebstoffverbindung vorgesehen, jedoch sind auch lösbare Verbindungen beispielsweise in Form von Schraubverbindungen realisierbar.

Der Strömungsweg 20 des Fluids führt zunächst in axialer Strömungsrichtung 18 aus dem Filterbett 14 in den radialen Außenbereich des weiteren Filterelements 22, in welchen das Fluid dann in radialer Strömungsrichtung 18 einströmt, um das weitere Filterelement 22 und damit die Filtervorrichtung schließlich wieder in axialer Strömungsrichtung 18 durch die weitere Durchtrittsöffnung 74 zu verlassen. Der Fußteil 70 des Sockelteils 68 weist einen umlaufenden weiteren Außenring 76 auf, mit dem der Fußteil 70 an der Außenseite 34 des Filtergehäuses 12 in Anlage und beispielsweise durch eine Klebstoffverbindung verbindbar ist. Das vorzugsweise einstückig ausgebildete Sockelteil 68 schließt damit die Filtervorrichtung 10, abgesehen von der vorgesehenen Durchtrittsöffnung 74 dichtend nach unten hin ab.

An der Endkappe 80, die das weitere Filterelement 22 verschließt, stützen sich säulenartig Teile des Filterbettes 14 in Form einer ersten Säule ab, die mit Blick auf die Figur gesehen oberhalb der Endkappe 80 bis zum Niveau 42 des Filterbetts 14 ragt. Hierbei ist der Durchmesser der von der Endkappe 80 abgestützten ersten Säule kleiner als der Durchmesser der Durchtrittsöffnung 40 der Halteeinrichtung 30. Eine weitere konzentrisch zu der ersten Säule angeordnete Säule des Filterbetts, die sich am Sockelteil 68 des Filtergehäuses 12 abstützt, stabilisiert die erste Säule, die sich ihrerseits an der Endkappe 80 in axialer Richtung abstützt. Bei dem in de Figur gezeigten Einbauzustand der Filtervorrichtung 10 bildet das Filterbett 14 oberhalb des weiteren Filterelements 22 einen in sich geschlossenen zylindrischen Funktionsblock aus, dessen Einbaumaß in Richtung der Längsachse 24 der Filtervorrichtung gesehen größer ist als das korrespondierend betrachtete Einbaumaß des weiteren Filterelements 22. Insbesondere kann vorgesehen sein, dass die Längserstreckung des zylindrischen Funktionsblocks dem Zwei- bis Zehnfachen des korrespondierenden Einbaumaßes des weiteren Filterelementes 22 entspricht. Die angesprochenen Säulen sind in der Figur nicht näher dargestellt und ergeben sich aus fiktiven Verlängerungen oberhalb der Endkappe 80 und der frei gebliebenen Stützfläche des Sockelteils 68.

Gemäß dem dargestellten angenäherten Strömungsweg 20 durchströmt im normalen Betriebszustand das abzureinigende Fluid zunächst in radialer Strömungsrichtung 18 das erste Filterelement 16, um dergestalt bereits partiell abgereinigt zu werden. Zumindest teilweise abgelenkt durch die Schrägfläche 48 der oberen Kappe 46 durchströmt das Fluid auf den weiteren Strömungsweg 20 in axialer Strömungsrichtung 18 das eine Art Rieselbett bildende Filterbett 14. Anschließend wird das Fluid in radiale Strömungsrichtung 18 umgelenkt und durchströmt für eine Feinstfiltration das weitere Filterelement 22. Das derart abgereinigte Fluid verläßt die Filtervorrichtung 10 in axialer Strömungsrichtung 18.

Beim Einbau in eine hydraulische Anlage (nicht dargestellt) ist vorzusehen, dass zur Vermeidung einer Luftanreicherung des Fluids die Filtervorrichtung 10 in ihre in der Fig. 1 dargestellten Betriebslage mit ihrem einen Filterelement 16 unterhalb eines Fluidniveaus 82 des zu reinigenden Fluids angeordnet ist.

Es sei noch angemerkt, dass die Filtervorrichtung 10 nicht nur für das Abreinigen der genannten Verschmutzungen, wie Säuren, metallischer Seifen sowie basischer Medien sondern auch beispielsweise zum Abreinigen langkettiger Alkohole geeignet ist.

## Patentansprüche

1. Filtervorrichtung (10) zum Reinigen von funktionalen Fluiden, insbesondere ausgewählt aus Phosphatestern, Ölen auf Phosphatesterbasis, Mineralölen und Phenolen, mit einem Filtergehäuse (12), in das ein Filterbett (14) eingebracht ist, insbesondere bestehend aus einer Mischung aus anionischem und kationischem lonenaustauscherharz, und mit mindestens einem Filterelement (16), das als Strömungsleiteinrichtung konzipiert eine Umlenkung des Fluids von einer radialen in eine axiale Strömungsrichtung (18) oder umgekehrt erlaubt, **dadurch gekennzeichnet, dass** das eine Filterelement (16) mittels einer Halteeinrichtung (30), die ein H-förmiges Querschnittprofil mit radial äußeren (36) und radial inneren (38) Schenkeln aufweist, auf das eine stirnseitige Ende des Filtergehäuses (12) aufgesetzt ist, dass eine Außenseite (32) des einen Filterelementes (16) eine Verlängerung einer Außenseite (34) des Filtergehäuses (12) bildet und dass dadurch, dass die Außenseite (32) des einen Filterelements (16) und die Außenseite (34) des Filtergehäuses (12) miteinander fluchten, eine flächige Anlage der radial äußeren Schenkel (36) des H-förmigen Profils der Halteeinrichtung (30) sowohl an der Außenseite (34) des Filtergehäuses (12) als auch an der Außenseite (32) des einen Filterelements (16) gewährleistet ist, und dass die radial inneren Schenkel (38) in den Innenraum des einen Filterelements (16) und in den Innenraum des Filtergehäuses (12) hineinragen.

2. Filtervorrichtung (10) nach Anspruch 1, **dadurch gekennzeichnet, dass** in Strömungsrichtung (18) des Fluids gesehen die mindestens eine als Filterelement (16) ausgebildete Strömungsleiteinrichtung vor dem Filterbett (14) und eine weitere als Filterelement (22) ausgebildete Strömungsleiteinrichtung nach dem Filterbett (14) angeordnet ist.

3. Filtervorrichtung (10) nach Anspruch 1 oder 2, **dadurch gekennzeichnet, dass** das weitere Filterelement (22) an der anderen Stirnseite des Filtergehäuses (12) angeordnet in dieses hineinragt und dass das Filterbett (14) das weitere Filterelement (22) zumindest teilweise umfasst, das eine Filterfeinheit aufweist, die feiner ist als die Partikelgröße der Mischung aus den lonenaustauscherharzen des Filterbettes (14).

4. Filtervorrichtung (10) nach einem der Ansprüche 1 bis 3, **dadurch gekennzeichnet, dass** die Halteeinrichtung (30) im Einbauzustand der Filtervorrichtung (10) oberhalb des Filterbettes (14) angeordnet ist und eine Durchtrittsöffnung (40) für das mittels des einen Filterelementes (16) von Partikelverschmutzungen abgereinigten Fluids aufweist, die koaxial zur Längsachse (24) des Filtergehäuses (12) angeordnet ist.

5. Filtervorrichtung (10) nach einem der Ansprüche 2 bis 4, **dadurch gekennzeichnet, dass** das weitere Filterelement (22) von einem Sockelteil (68) getragen ist, das mit seinem Fußteil (70) in der Art einer Endkappe für das Filtergehäuse (12) ausgebildet ist und mit seinem Kopfteil (72) in koaxialer Anordnung zur Längsachse (24) des Filtergehäuses (12) angeordnet eine weitere Durchtrittsöffnung (74) aufweist für den Austritt des mittels der Filtervorrichtung (10) insgesamt abgereinigten Fluids.

6. Filtervorrichtung (10) nach Anspruch 5, **dadurch gekennzeichnet, dass** das weitere Filterelement (22) an seinem, dem Sockelteil (68) gegenüberliegenden Ende mit einer Endkappe (80) verschlossen ist, an der sich säulenartig Teile des Filterbettes (14) in Form einer ersten Säule abstützen.

7. Filtervorrichtung (10) nach Anspruch 6, **dadurch gekennzeichnet, dass** der Durchmesser einer von der Endkappe (80) des weiteren Filterelementes (22) abgestützten ersten Säule kleiner ist als die Durchtrittsöffnung (40) der Halteeinrichtung (30) und dass eine weitere konzentrisch zu der ersten Säule angeordnete weitere Säule sich am Sockelteil (68) des Filtergehäuses (12) abstützend die erste Säule stabilisiert.

8. Filtervorrichtung (10) nach Anspruch 7, **dadurch gekennzeichnet, dass** die Wirkvolumina beider Säulen für die Fluidabreinigung im Wesentlichen gleich bemessen sind.

9. Filtervorrichtung (10) nach einem der Ansprüche 2 bis 8, **dadurch gekennzeichnet, dass** das Filterbett (14) im Einbauzustand der Filtervorrichtung (10) gesehen oberhalb des weiteren Filterelementes (22) einen in sich geschlossenen, zylindrischen Funktionsblock ausbildet, dessen Einbaumaß in axialer Längsrichtung der Filtervorrichtung gesehen größer ist als das korrespondierend betrachtete Einbaumaß des weiteren Filterelementes (22).

10. Filtervorrichtung (10) nach einem der Ansprüche 2 bis 9, **dadurch gekennzeichnet, dass** im normalen Betriebszustand das abzureinigende Fluid in radialer Strömungsrichtung (18) das erste Filterelement (16) durchströmt, in axialer Strömungsrichtung (18) partiell abgereinigt das eine Art Rieselbett bildende Filterbett (14) mit den lonenaustauscherharzen durchströmt, um anschließend in erneuter, radialer Strömungsrichtung (18) umgelenkt für eine Feinstfiltration das weitere Filterelement (22) zu durchströmen, und dass das derart abgereinigte Fluid die Filtervorrichtung (10) in axialer Strömungsrichtung (18) verläßt.

11. Filtervorrichtung (10) nach einem der vorangehenden Ansprüche, **dadurch gekennzeichnet, dass** die Filtervorrichtung (10) im Nebenstrom einer hydraulischen Anlage angeschlossen ist und zur Vermeidung einer Luftanreicherung des Fluids, die Filtervorrichtung (10) unterhalb des Fluidniveaus (82) der hydraulischen Anlage angeordnet ist.

12. Filtervorrichtung (10) nach einem der Ansprüche 1 bis 11, **dadurch gekennzeichnet, dass** das anionische lonenaustauscherharz und das kationische lonenaustauscherharz jeweils in Form eines Granulats vorliegend miteinander vermischt das Filterbett (14) ausbilden.

13. Filtervorrichtung (10) nach Anspruch 12, **dadurch gekennzeichnet, dass** das Filterbett (14) aus 60 % bis 95 % anionischem lonenaustauscherharz und aus 40 % bis 5 % kationischem lonenaustauscherharz besteht, vorzugsweise aus 70 % bis 90 % anionischem lonenaustauscherharz, und aus 30% bis 10 % kationischem lonenaustauscherharz, besonders bevorzugt aus 90 % anionischem lonenaustauscherharz, und aus 10 % kationischem lonenaustauscherharz besteht.

## Claims

1. A filter device (10) for cleaning functional fluids, chosen in particular from phosphate esters, phosphate ester-based oils, mineral oils and phenols, having a filter housing (12) into which a filter bed (14) is inserted, in particular consisting of a mixture of anionic and cationic ion exchange resins, and having at least one filter element (16) which, designed as a flow guide device, allows diversion of the fluid from a radial into an axial flow direction (18) or vice versa, **characterised in that** one filter element (16) is seated on one face-side end of the filter housing (12) by means of a holding device (30) which has an H-shaped cross-sectional profile with radially outer (36) and radially inner (38) legs, that an outer side (32) of one filter element (16) forms an extension of an outer side (34) of the filter housing (12), and that since the outer side (32) of one filter element (16) and the outer side (34) of the filter housing (12) are flush with one another, a flat contact of the radially outer legs (36) of the H-shaped profile of the holding device (30) is guaranteed both on the outer side (32) of the filter housing (12) and on the outer side (32) of one filter element (16), and that the radially inner legs (38) project into the interior of one filter element (16) and into the interior of the filter housing (12).

2. The filter device according to Claim 1, **characterised in that**, as viewed in the flow direction (18) of the fluid, the at least one flow guide device made in the form of a filter element (16) is located upstream of the filter bed (14), and another flow guide device made in the form of a filter element (22) is located downstream of the filter bed (14).

3. The filter device (10) according to Claim 1 or 2, **characterised in that** the further filter element (22) located on the other face side of the filter housing (12) projects into the latter, and that the filter bed (14) at least partially encompasses the further filter element (22) which has a filter fineness that is finer than the particle size of the mixture of the ion exchange resins of the filter bed (14).

4. The filter device (10) according to any of Claims 1 to 3, **characterised in that** in the installed state of the filter device (10) the holding device (30) is located above the filter bed (14) and has a through opening (40) for the fluid from which the particulate dirt has been removed by means of one filter element (16), which opening is located coaxially to the longitudinal axis (24) of the filter housing (12).

5. The filter device (10) according to any of Claims 2 to 4, **characterised in that** the further filter element (22) is supported by a base part (68) which, with its foot part (70), is made in the manner of an end cap for the filter housing (12) and, located with its head part (72) in an arrangement coaxial to the longitudinal axis (24) of the filter housing (12), has another passage opening (74) for the exit of the fluid which has been cleaned as a whole by means of the filter device (10).

6. The filter device (10) according to Claim 5, **characterised in that** the further filter element (22) is sealed on its end opposite the base part (68) with an end cap (80) on which parts of the filter bed (14) are supported in the form of a first column.

7. The filter device (10) according to Claim 6, **characterised in that** the diameter of a first column supported by the end cap (80) of the further filter element (22) is smaller than the passage opening (40) of the holding device (30), and that another column which is arranged concentrically to the first column being supported on the base part (68) of the filter housing (12) stabilises the first column.

8. The filter device (10) according to Claim 7, **characterised in that** the active volumes of the two columns for the fluid cleaning are of essentially the same size.

9. The filter device (10) according to any of Claims 2 to 8, **characterised in that**, as viewed in the installed state of the filter device (10), the filter bed (14) above the further filter element (22) forms a closed cylindrical function block the installation size of which, as viewed in the axial longitudinal direction of the filter device, is greater than the correspondingly viewed installation size of the further filter element (22).

10. The filter device (10) according to any of Claims 2 to 9, **characterised in that** in the normal operating state, the fluid to be cleaned flows in the radial flow direction (18) through the first filter element, in the axial flow direction (18), partially cleaned, flows through the filter bed (14) which forms a kind of trickle bed with the ion exchange resins in order to then again flow through the further filter element (22) in the radial flow direction (18), diverted for extremely fine filtration, and that the fluid which has been cleaned in this way leaves the filter device (10) in the axial flow direction (18).

11. The filter device (10) according to any of the preceding claims, **characterised in that** the filter device (10) is connected in the bypass flow of a hydraulic system and the filter device (10) is located below the fluid level (82) of the hydraulic system in order to prevent air from accumulating in the fluid.

12. The filter device (10) according to any of Claims 1 to 11, **characterised in that** the anionic ion exchange resin and the cationic ion exchange resin, each present in the form of a granulate, mixed with one another, form the filter bed (14).

13. The filter device (10) according to Claim 12, **characterised in that** the filter bed (14) consists of 60% to 95% anionic ion exchange resin and of 40% to 5% cationic ion exchange resin, preferably of 70% to 90% anionic ion exchange resin, and of 30% to 10% cationic ion exchange resin, particularly preferably of 90% anionic ion exchange resin and of 10% cationic ion exchange resin.

## Revendications

1. Dispositif (10) de filtration pour épurer des fluides fonctionnels choisis notamment parmi des esters de phosphate, des huiles à base d'ester de phosphate, des huiles minérales et des phénols, comprenant une enveloppe (12) de filtre, dans laquelle est introduit un lit (14) filtrant, constitué notamment d'un mélange de résine échangeuse d'ions anionique et cationique et comprenant au moins un élément (16) de filtre, qui, conçu comme un dispositif de conduite du courant, rend possible une déviation du fluide d'une direction d'écoulement radial à une direction (18) d'écoulement axial ou inversement, **caractérisé en ce que** le un élément (16) de filtre est mis, eu moyen d'un dispositif (30) de maintien, qui a un profil de section transversale en forme de H, en ayant des branches extérieures (36) radialement et intérieures (38) radialement, sur l'extrémité du côté frontal de l'enveloppe (12) du filtre, **en ce qu'**un côté (32) extérieur du un élément (16) de filtre forme un prolongement d'un côté (34) extérieur de l'enveloppe (12) du filtre et **en ce que**, par le fait que le côté (32) extérieur du un élément (16) de filtre et le côté (34) extérieur de l'enveloppe (12) du filtre sont alignés, une application en surface des branches (36) extérieures radialement du profil en forme de H du dispositif (30) de maintien est assurée tant sur le côté (34) extérieur de l'enveloppe (12) du filtre qu'également sur le côté (32) extérieur du un élément (16) de filtre et **en ce que** les branches (38) intérieures radialement pénètrent dans l'espace intérieur du un élément (16) de filtre et dans l'espace intérieur de l'enveloppe (12) du filtre.

2. Dispositif (10) de filtration suivant la revendication 1, **caractérisé en ce que**, considéré dans le sens (18) du courant du fluide, le au moins un dispositif de conduite du courant, constitué sous la forme d'un élément (16) de filtre, est disposé avant le lit (14) filtrant et un autre dispositif de conduit du courant, constitué sous la forme d'un élément (12) de filtre, est disposé après le lit (14) filtrant.

3. Dispositif (10) de filtration suivant la revendication 1 ou 2, **caractérisé en ce que** l'autre élément (22) de filtre, disposé à l'autre côté frontal de l'enveloppe (12) du filtre, pénètre dans celle-ci et **en ce que** le lit (14) filtrant entoure, au moins en partie, l'autre élément (22) de filtre, qui a une finesse de filtre plus fine que la dimension de particules du mélange constitué des résines échangeuses d'ions du lit (14) filtrant.

4. Dispositif (10) de filtration suivant l'une des revendications 1 à 3, **caractérisé en ce que** le dispositif (30) de maintien est, à l'état monté du dispositif (10) de filtration, disposé au-dessus du lit (14) filtrant et a une ouverture (40) de passage du fluide épuré de pollutions de particules au moyen du un élément (16) de filtre, l'ouverture étant disposée coaxialement à l'axe (24) longitudinal de l'enveloppe (12) du filtre.

5. Dispositif (10) de filtration suivant l'une des revendications 2 à 4, **caractérisé en ce que** l'autre élément (22) de filtre est porté par une partie (68) de socle, qui est constituée par sa partie (70) de pied, à la manière d'une coiffe d'extrémité de l'enveloppe (12) du filtre et qui a, par sa partie (72) de tête, suivant un agencement coaxial à l'axe (24) longitudinal de l'enveloppe (12) du filtre, une autre ouverture (74) de passage pour la sortie du fluide épuré dans son ensemble au moyen du dispositif (10) de filtration.

6. Dispositif (10) de filtration suivant la revendication 5, **caractérisé en ce que** l'autre élément (22) de filtre est fermé, à son extrémité opposée à la partie (68) de socle, par une coiffe (80) d'extrémité sur laquelle s'appuie des parties de type en colonne du lit (14) filtrant, sous la forme d'une première colonne.

7. Dispositif (10) de filtration suivant la revendication 6, **caractérisé en ce que** le diamètre d'une première colonne appuyée par la coiffe (80) d'extrémité de l'autre élément (22) de filtre est plus petit que l'ouverture (40) de passage du dispositif (30) de maintien et **en ce qu'**une autre colonne, disposée concentriquement à la première colonne, stabilise la première colonne en s'appuyant sur la partie (68) de socle de l'enveloppe (12) de filtre.

8. Dispositif (10) de filtration suivant la revendication 7, **caractérisé en ce que** les volumes efficaces des deux colonnes, pour l'épuration de fluide, sont sensiblement les mêmes.

9. Dispositif (10) de filtration suivant l'une des revendications 2 à 8, **caractérisé en ce que** le lit (14) filtrant forme, considéré à l'état monté du dispositif (10) de filtration, au-dessus de l'autre élément (22) de filtre, un bloc fonctionnel cylindrique en soi fermé, dont la dimension de montage, considéré dans la direction longitudinale axiale du dispositif de filtration, est plus grande que la dimension de montage, considéré de manière correspondante, de l'autre élément (22) de filtre.

10. Dispositif (10) de filtration suivant l'une des revendications 2 à 9, **caractérisé en ce que**, dans l'état de fonctionnement normal, le fluide à épurer passe dans le premier élément (16) de filtre, dans la direction (18) d'écoulement radiale, passe dans la direction (18) d'écoulement axiale en étant épuré partiellement dans le lit (14) filtrant formant une sorte de lit de ruissellement ayant les résines échangeuses d'ions et ensuite, passe, en étant dévié à nouveau dans une direction (18) d'écoulement radiale, pour une filtration fine, dans l'autre élément (22) filtrant et **en ce que** le fluide ainsi épuré quitte le dispositif (10) de filtration dans une direction (18) d'écoulement axiale.

11. Dispositif (10) de filtration suivant l'une des revendications précédentes, **caractérisé en ce que** le dispositif (10) de filtration est raccordé au courant auxiliaire d'une installation hydraulique et, pour empêcher que le fluide s'enrichisse en air, le dispositif (10) de filtration est disposé en dessous du niveau (82) de fluide de l'installation hydraulique.

12. Dispositif (10) de filtration suivant l'une des revendications 1 à 11, **caractérisé en ce que** la résine échangeuse d'ions anionique et la résine échangeuse d'ions cationique, chacune sous la forme d'un produit granulé, constituent le lit (14) filtrant, de préférence en étant mélangées entre elles.

13. Dispositif (10) de filtration suivant la revendication 12, **caractérisé en ce que** le lit (14) filtrant est constitué de 60 % à 95 % de résine échangeuse d'ions anionique et de 40 % à 5 % de résine échangeuse d'ions cationique, de préférence de 70 % à 90 % de résine échangeuse d'ions anionique et de 30 % à 10 % de résine échangeuse d'ions cationique, d'une manière particulièrement préférée de 90 % de résine échangeuse d'ions anionique et de 10 % de résine échangeuse d'ions cationique.
